# EUROPÄISCHE PATENTSCHRIFT

(11) **EP 3 199 215 B1**
(45) Veröffentlichungstag und Bekanntmachung des Hinweises auf die Patenterteilung: **01.08.2018**
(21) Anmeldenummer: 16152941.7
(22) Anmeldetag: 27.01.2016
(51) Int. Cl.: B01D 1/14, B01D 1/22, B01D 3/26, B01D 3/34, B01D 19/00

(54) **VORRICHTUNG UND VERFAHREN ZUM IN-KONTAKT-BRINGEN EINES GASES MIT EINER FLÜSSIGKEIT**
APPARATUS AND PROCESS FOR BRINGING IN CONTACT A GAS AND A LIQUID
APPAREIL ET PROCÉCÉ POUR LA MISE EN CONTACT D'UN GAZ ET D'UN LIQUIDE

(43) Veröffentlichungstag der Anmeldung: 02.08.2017
(73) Patentinhaber: AWS Group AG, 74076 Heilbronn (DE)
(72) Erfinder: Hermann, Stefan, 74076 Heilbronn (DE); Altmann, Jens, 74076 Heilbronn (DE)
(74) Vertreter: Maikowski & Ninnemann Patentanwälte Partnerschaft mbB

(56) Entgegenhaltungen:
- DE-A1-102012 109 042
- US-A- 3 748 828
- US-A1- 2012 241 988
- US-A1- 2013 087 043

## Beschreibung

Die Erfindung betrifft eine Vorrichtung und ein Verfahren zum In-Kontakt-Bringen eines Gases mit einer Flüssigkeit. Insbesondere betrifft die Erfindung eine Vorrichtung zum In-Kontakt-Bringen eines Gases mit einer Flüssigkeit, die einen Einbau umfasst, der geeignet ist, die Stoffaustauschfläche zwischen Gasstrom und Flüssigkeitsstrom zu vergrößern, sowie ein entsprechendes Verfahren zum In-Kontakt-Bringen eines Gases mit einer Flüssigkeit, bei dem die Flüssigkeit durch eine solche Vorrichtung fließt.

Das In-Kontakt-Bringen eines Gases mit einer Flüssigkeit kann zum Übertritt von Wärme und/oder Substanzen aus dem Gas in die Flüssigkeit und/oder umgekehrt genutzt werden. Der Substanzübertritt kann mit chemischen Reaktionen zwischen Gas (oder Gasbestandteilen) und Flüssigkeit (oder Flüssigkeitsbestandteilen) einhergehen.

Ein Beispiel für das In-Kontakt-Bringen eines Gases mit einer Flüssigkeit ist die Luftreinigung, bei der Luftverunreinigungen (Schadstoffe) durch In-Kontakt-Bringen von verunreinigter Luft mit einer geeigneten Absorbensflüssigkeit aus der Luft entfernt werden, also Substanzen aus dem Gas in die Flüssigkeit übertreten (Absorption in der Flüssigkeit). Umgekehrt kann man auch Substanzen aus der Flüssigkeit in das Gas übertreten lassen, also eine Desorption durchführen. Nach den Gesetzen der Thermodynamik können Absorption und Desorption durch Änderung von Druck und/oder Temperatur beeinflusst werden. Stattdessen oder gleichzeitig kommt es immer dann zu einem Wärmeübergang zwischen Gas und Flüssigkeit, wenn diese sich in ihrer Temperatur unterscheiden. Ein Temperaturunterschied kann dabei auch durch Substanzübertritt (etwa Verdunstung der Flüssigkeit) oder chemische Reaktionen zwischen Gas und Flüssigkeit hervorgerufen werden.

Ein Beispiel für eine Vorrichtung zum In-Kontakt-Bringen eines Gases mit einer Flüssigkeit gemäß dem Stand der Technik ist ein so genannter Air stripper, d.h. eine senkrechte Kolonne, die meist mit Füllkörpern gefüllt ist, auf die von oben eine Flüssigkeit, die flüchtige Bestandteile enthält, aufgebracht wird, während im Gegenstrom von unten nach oben Luft durch die Kolonne geblasen wird, um flüchtige Bestandteile aus der Flüssigkeit in den Luftstrom zu überführen (Desorption, siehe oben). Eine solche Vorrichtung kann auch zur Luftreinigung, wie oben beschrieben, verwendet werden, d.h. zur Gegenstrom-Absorption. Die mit den aus der Luft entfernten Schadstoffen beladene Absorbensflüssigkeit kann durch Desorption regeneriert werden und erneut zur Absorption verwendet werden, sodass die Absorbensflüssigkeit in einem geschlossenen Kreislauf verwendet werden kann.

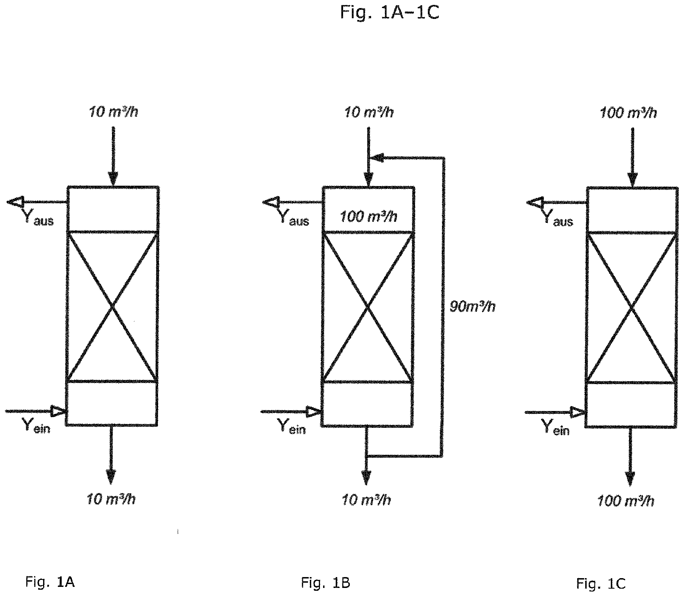

Für einen optimalen Kontakt zwischen Gas und Flüssigkeit in einer solchen Kolonne ist eine minimale Berieselungsdichte (Flüssigkeitsmenge pro Querschnittsfläche und Zeiteinheit (m³/(m²/h))) erforderlich. Unterhalb der minimalen Berieselungsdichte verringert sich der Stoffaustausch. Bei der Reinigung von Abluft (Yₑᵢₙ, gereinigte Abluft ist mit Yₐᵤₛ bezeichnet) mit einer solchen Kolonne gewährleistet die zur Reinigung notwendige Menge an Absorbensflüssigkeit für große Abluftmengen und/oder geringe Schadstoffkonzentrationen nicht das Erreichen der minimalen Berieselungsdichte (Fig. 1A, Fall A1). Wenn, um dieses Problem zu umgehen, die Flüssigkeit, die unten aus der Kolonne austritt, teilweise zurückgeführt, d.h. erneut oben auf die Kolonne aufgebracht wird (Fig. 1B, Fall A2), sinkt die Effizienz des Systems, da dann bereits gereinigte Luft am Kolonnenkopf mit bereits beladener Absorbensflüssigkeit in Kontakt gebracht wird. Um den Stoffaustausch zu optimieren, kann die Durchsatzmenge der Flüssigkeit gesteigert werden (Fig. 1C, Fall A3), was aber die Wirtschaftlichkeit des Verfahrens stark verringert.

Während sich nach einer thermodynamischen Berechnung für einen Beispielfall einer Kolonne mit fünf Stufen (fünf theoretischen Kolonnenböden) ohne Berücksichtigung eines reduzierten Stoffaustauschs durch zu geringe Berieselungsdichte ein Abscheidegrad für den Fall A1 von 91 %, für den Fall A2 von 67 % und für den Fall A3 von >95 % ergibt, ist der Abscheidegrad für den Fall A1 in der Praxis aufgrund der zu geringen Berieselungsdichte (im Beispiel ca. 1 m³/(m²/h) bei einem Normalbereich von mindestens 10 m³/(m²/h)) nicht erreichbar.

Diese Probleme werden durch eine Vorrichtung gemäß Anspruch 1 und ein Verfahren gemäß Anspruch 5 gelöst.

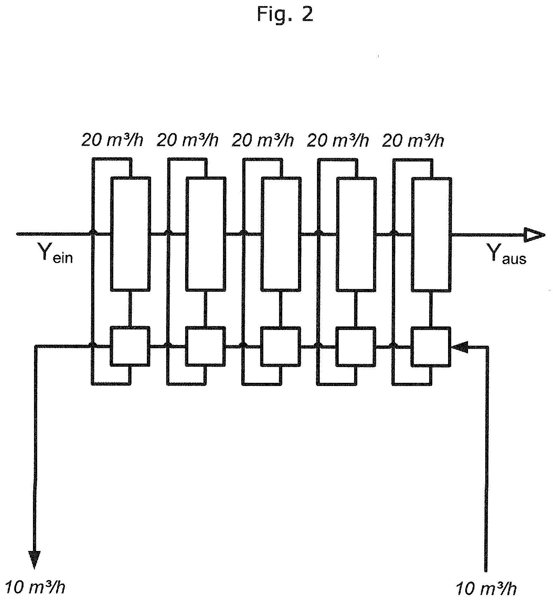

Die aus dem Stand der Technik bekannte, oben beschriebene Kolonne arbeitet im Gegenstrom und kann thermodynamisch durch eine Zahl an theoretischen Trennstufen berechnet werden. Erfindungsgemäß wird stattdessen gewissermaßen eine liegende Kolonne mit mindestens zwei Trennstufen vorgesehen, wobei innerhalb der einzelnen Stufen ein Kreuzstrom, d.h. mit vertikalem Flüssigkeitsstrom und horizontalem Gasstrom, vorliegt, während der Gasstrom durch die mindestens zwei Stufen im Gegenstrom hinsichtlich des Gesamtflüssigkeitsstroms durch die mindestens zwei Stufen verläuft. Dokument US 3 748 828 offenbart auch eine Vorrichtung zum In-Kontakt-Bringen eines Gasstroms und eines Flüssigkeitsstroms. Fig. 2 zeigt schematisch die Flüssigkeitsführung in einer fünfstufigen erfindungsgemäßen Vorrichtung, wobei die länglichen Rechtecke den Einbau und die Quadrate einen Flüssigkeitstank symbolisieren.

Als Einbau ist eine Schüttung von Füllkörpern, zum Beispiel handelsüblichen Füllkörpern für senkrechte Kolonnen, verwendet. Jede Stufe hat ihren eigenen Flüssigkeitskreislauf, in dem Flüssigkeit von oben auf den Einbau aufgebracht wird und nach Durchlaufen des Einbaus aufgefangen und, zum Beispiel mit einer Pumpe, erneut auf den Einbau aufgebracht wird. Diese eigenen Flüssigkeitskreisläufe der Stufen, die jeweils im Kreuzstrom zum Gasstrom verlaufen, sind, in Fig. 2 beispielhaft über die Flüssigkeitstanks, miteinander verbunden, sodass sich ein Gesamtflüssigkeitskreislauf durch die Vorrichtung ergibt. Der, in Gasstromrichtung gesehen, letzten Stufe kann frische Flüssigkeit zugeführt werden, die durch den eigenen Flüssigkeitskreislauf der letzten Stufe verläuft und von dort den vorgeschalteten Stufen bis hin zur ersten Stufe zugeführt wird, also im Gegenstrom zum Gasstrom, und nach Verlassen der letzten Stufe und Regeneration durch Desorption (bei der Anwendung zur Luftreinigung) erneut der letzten Stufe zugeführt werden kann. Dabei kann der Flüssigkeitsstrom in den eigenen Flüssigkeitskreisläufen der Stufen größer oder kleiner, bevorzugt größer, als der Flüssigkeitsstrom im Gesamtflüssigkeitskreislauf durch die Vorrichtung (d.h. die Zufuhr an frischer Flüssigkeit zu letzten Stufe) eingestellt werden. Ein größerer Flüssigkeitsstrom in den eigenen Flüssigkeitsläufen der Stufen kann somit die nötige Berieselungsdichte ermöglichen, während der Flüssigkeitsstrom im Gesamtflüssigkeitskreislauf, d.h. die Zufuhr an frischer Flüssigkeit zur letzten Stufe, kleiner gehalten werden kann, was die Wirtschaftlichkeit verbessert. Da gegenüber einer Rückführung von Flüssigkeit im Falle einer herkömmlichen senkrechten Kolonne (Fall A2, wie oben beschrieben) die Konzentration an Schadstoff in der Flüssigkeit in der letzten Stufe, verglichen mit der Konzentration an Schadstoff in der Flüssigkeit in der ersten Stufe, gering ist, kann dennoch eine gute Reinigungsleistung erreicht werden. Das Verhältnis der Flüssigkeitsströme kann je nach Anwendungsfall optimiert werden.

Eine thermodynamische Berechnung für einen Fall entsprechend den Fällen A1 bis A3, die oben beschrieben wurden, ergibt für eine erfindungsgemäße Vorrichtung mit 5 Stufen gemäß Fig. 2 einen Abscheidegrad von 85 %. Dies ist besser, als es sich im Fall A1 in der Praxis erreichen lässt. Fall A3 zeigt die beste Reinigung, jedoch mit extrem hohen Kosten. Fall A2 zeigt einen wesentlich schlechteren Abscheidegrad. Somit lässt sich erfindungsgemäß eine gute Reinigungsleistung bei geringen Kosten erreichen.

Die einzelnen Stufen können mit jeweils eigenen Gehäusen realisiert werden. Alternativ können auch mehrere Stufen in einem gemeinsamen Gehäuse realisiert werden. In diesem Fall ist es möglich, für jede Stufe einen einzelnen Einbau zu verwenden oder mehrere Stufen mit einem gemeinsamen Einbau zu realisieren, wobei durch den Einbau mehrere im Wesentlichen senkrechte und mindestens teilweise voneinander getrennte Flüssigkeitsströme erzeugt werden. Jeder dieser getrennten Flüssigkeitsströme entspricht einer Trennstufe.
- Fig. 1A bis 1C: zeigen schematisch herkömmliche senkrechte Kolonnen mit verschiedenen Flüssigkeitsströmen.
- Fig. 2: zeigt schematisch eine Vorrichtung mit fünf Stufen.
- Fig. 3: zeigt einen schematischen Querschnitt durch eine erfindungsgemäße Ausführungsform mit drei Stufen.
- Fig. 4: zeigt einen schematischen Querschnitt durch einen beispielhaften Flüssigkeitsverteiler.

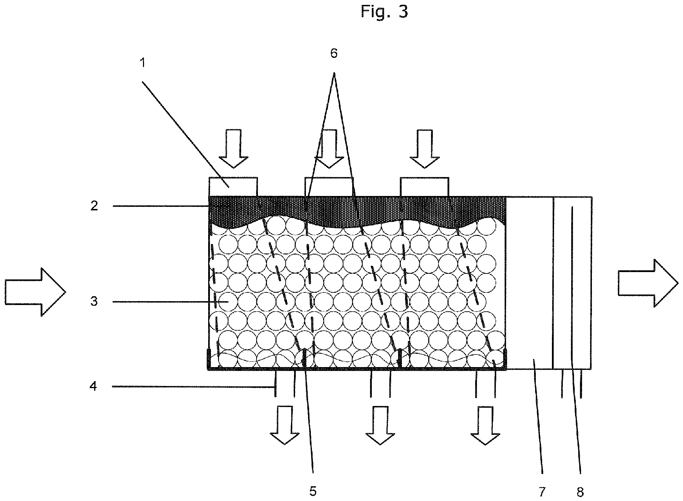

Im Folgenden wird unter Bezug auf Fig. 3 eine beispielhafte Ausführungsform mit drei Stufen beschrieben, die in einem gemeinsamen Gehäuse mit einem gemeinsamen Einbau realisiert wird.

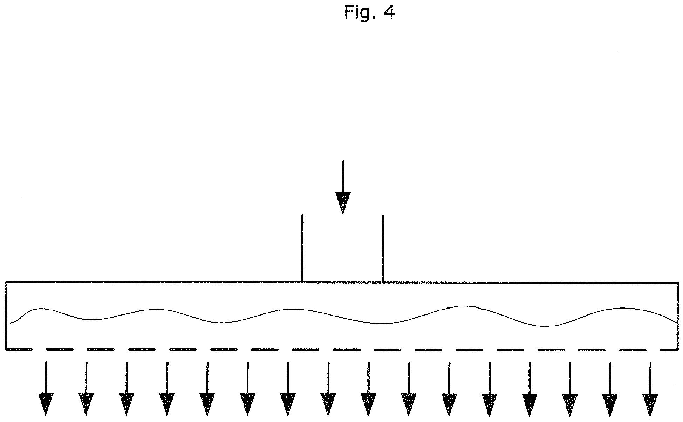

In einem Gehäuse 7 befindet sich ein gemeinsamer Einbau 3, der durch eine Schüttung von handelsüblichen Füllkörpern gebildet wird. Als besonders geeignet hat sich zum Beispiel der Pall-Ring 15 und 25 der Firma VFF gezeigt. Ein Gasstrom, z.B. zu reinigende Abluft, tritt von links in das Gehäuse 7 und den Einbau 3 ein und wird nach Verlassen des Einbaus 3 durch eine Leerkammer mit nachgeschaltetem Tropfenabscheider 8 geführt und verlässt danach das Gehäuse 7, wie durch die Pfeile ganz links und ganz rechts in Fig. 3 gezeigt. Als Tropfenabscheider können herkömmliche Vorrichtungen, wie Lamellenabscheider, Demister, Coalescer usw., verwendet werden. Eine geeignete Gasgeschwindigkeit ist eine Lehrrohrgeschwindigkeit von 2 m/s im Bereich des Gehäuses 7. Zwischen der oberen Oberfläche des Einbaus 3 und der Oberseite des Gehäuses 7 befindet sich eine Matte 2 aus offenporigem Schaumstoff, zum Beispiel aus PU, oder alternativ aus einem Fasermaterial, zum Beispiel Mineralwolle. Die Flüssigkeit wird für jede Stufe durch einen Flüssigkeitsverteiler 1 auf die Matte 2 aufgebracht. Der Flüssigkeitsverteiler 1, der in Figur 4 schematisch im Querschnitt gezeigt ist (wobei die Pfeile den Flüssigkeitsstrom veranschaulichen), verteilt die Flüssigkeit über die gesamte Breite (quer zum Gasstrom) des Einbaus 3 und ist so ausgelegt, dass sich die Flüssigkeit über den Löchern des Verteiler anstaut, um eine gleichmäßige Verteilung über die gesamte Aufgabefläche zu erzielen. Die Matte 2 verhindert einerseits, dass Gas zwischen Einbau 3 und Oberseite des Gehäuses 7 vorbeiströmt, und bewirkt andererseits, dass die Flüssigkeit noch gleichmäßiger auf den Einbau 3 aufgebracht wird. Die Vorrichtung ist jedoch auch ohne Matte 2 funktionsfähig. Der Boden des Gehäuses 7 dient zusammen mit Trennwänden 5 als Sammelvorrichtung zum Aufnehmen der Flüssigkeit, die den Einbau unten verlässt und durch den Ablauf 4 aus dem Gehäuse 7 austritt. Aufgrund des Einbaus 3 und des Gasstroms verbreitert sich der Verlauf der Flüssigkeit durch den Einbau 3, was bei der Positionierung der Trennwand 5 und des nächsten Flüssigkeitsverteilers 1 berücksichtigt werden muss. In Figur 3 sind drei Stufen dargestellt, die jeweils einen Flüssigkeitsverteiler 1 und einen Ablauf 4 aufweisen. Die bei der mittleren Stufe mit 6 markierten gestrichelten Linien symbolisieren den ungefähren Flüssigkeitsverlauf. Die aus dem Ablauf 4 austretende Flüssigkeit kann, wie in Figur 2 gezeigt, jeweils in einen Flüssigkeitstank geführt werden, aus dem die Flüssigkeit durch eine Pumpe erneut dem Flüssigkeitsverteiler 1 zugeführt wird. Die Flüssigkeitstanks sind in diesem Fall miteinander verbunden, um den Gesamtflüssigkeitsstrom durch die Vorrichtung zu ermöglichen. Alternativ kann die Flüssigkeit aus den Abläufen 4 einem gemeinsamen Tank zugeführt werden, der mit Trennblechen zwischen den einzelnen Abläufen und Pumpenansaugbereichen einerseits eine teilweise Trennung, aber andererseits eine teilweise Verbindung zwischen den einzelnen Stufen bewirkt. Auch andere Ausführungsformen sind möglich, zum Beispiel, dass in jeder Stufe die Flüssigkeit über den Ablauf 4 und eine Pumpe direkt dem Flüssigkeitsverteiler 1 zugeführt wird und der Flüssigkeitsstrom von Stufe zu Stufe durch geeignete Wahl der Höhe der Trennwände 5 oder durch Öffnungen in den Trennwänden 5 ermöglicht wird.

## Patentansprüche

1. Vorrichtung zum In-Kontakt-Bringen eines Gasstroms und eines Flüssigkeitsstroms, die Folgendes umfasst:
ein geschlossenes Gehäuse (7),
einen Einbau (3), der geeignet ist, die Stoffaustauschfläche zwischen Gasstrom und Flüssigkeitsstrom zu vergrößern,
wobei der Einbau (3) eine Schüttung von Füllkörpern ist,
mindestens zwei Vorrichtungen zum Aufbringen von Flüssigkeit auf die Oberseite des Einbaus (3), die jeweils geeignet sind, einen Flüssigkeitsstrom durch den Einbau (3) von oben nach unten zu erzeugen,
mindestens zwei Sammelvorrichtungen zum Aufnehmen von Flüssigkeit, die aus der Unterseite des Einbaus (3) austritt,
einen Gaseinlass in das Gehäuse,
einen Gasauslass aus dem Gehäuse,
wobei der Gaseinlass und der Gasauslass zusammen geeignet sind, einen Gasstrom durch den Einbau (3) zu ermöglichen, der im Wesentlichen rechtwinklig zu dem Flüssigkeitsstrom verläuft,
wobei die mindestens zwei Vorrichtungen zum Aufbringen von Flüssigkeit und die mindestens zwei Sammelvorrichtungen in Richtung des Gasstroms hintereinander angeordnet sind, wahlweise innerhalb desselben Gehäuses oder in getrennten Gehäusen.
wobei die mindestens zwei Vorrichtungen zum Aufbringen von Flüssigkeit als Flüssigkeitsverteiler (1) gestaltet sind, der die Flüssigkeit über die gesamte Breite des Einbaus (3) verteilt,
wobei der Zwischenraum zwischen der oberen Oberfläche des Einbaus und der oberen Wand des Gehäuses (7) durch eine Matte (2) aus einem offenporigen und flüssigkeitsdurchlässigen Schaumstoff oder einem flüssigkeitsdurchlässigen Fasermaterial ausgefüllt ist und
wobei der Flüssigkeitsverteiler (1) so angeordnet ist, dass die Flüssigkeit aus dem Flüssigkeitsverteiler jeweils durch die Matte (2) hindurchtritt. neue Ansprüche_Prüfungsantrag

2. Vorrichtung nach Anspruch 1, wobei die mindestens zwei Vorrichtungen zum Aufbringen von Flüssigkeit und die mindestens zwei Sammelvorrichtungen innerhalb desselben Gehäuses angeordnet sind und die mindestens zwei Flüssigkeitsströme, die durch sie erzeugt werden, durch denselben Einbau verlaufen.

3. Vorrichtung nach einem der Ansprüche 1 bis 2, wobei die Flüssigkeitsströme durch den Einbau von oben nach unten so miteinander verbunden sind, dass ein Gesamtflüssigkeitsstrom durch die Vorrichtung, der in entgegengesetzter Richtung zu dem Gasstrom verläuft, erzeugt werden kann.

4. Vorrichtung nach Anspruch 3, wobei die Verbindung der Flüssigkeitsströme zu einem Gesamtflüssigkeitsstrom durch die Sammelvorrichtungen erfolgt.

5. Verfahren zum In-Kontakt-Bringen eines Gasstroms und eines Flüssigkeitsstroms in einer Vorrichtung nach einem der vorhergehenden Ansprüche, wobei der Flüssigkeitsstrom im Wesentlichen senkrecht von oben nach unten durch die Matte (2) und den Einbau (3) verläuft, der geeignet ist, die Stoffaustauschfläche zwischen Gasstrom und Flüssigkeitsstrom zu vergrößern, wobei der Einbau (3) eine Schüttung von Füllkörpern ist, der Gasstrom im Wesentlichen rechtwinklig zu dem Flüssigkeitsstrom verläuft, der Flüssigkeitsstrom mindestens zwei Teilflüssigkeitsströme umfasst, die in Richtung des Gasstroms hintereinander angeordnet sind.

## Claims

1. Device for bringing a gas flow and a liquid flow into contact, said device comprising the following:
a closed housing (7),
an internal (3) which is suitable for increasing the mass transfer area between the gas flow and liquid flow,
wherein the internal (3) is a bed of packing elements,
at least two devices for applying liquid to the top side of the internal (3), said devices each being suitable for creating a liquid flow from top to bottom through the internal (3),
at least two collecting devices for receiving liquid which passes out of the underside of the internal (3),
a gas inlet into the housing,
a gas outlet out of the housing,
wherein the gas inlet and the gas outlet together are suitable for allowing a gas flow through the internal (3), said gas flow running substantially at right angles to the liquid flow,
wherein the at least two devices for applying liquid and the at least two collecting devices are arranged in succession in the direction of the gas flow, optionally within the same housing or in separate housings,
wherein the at least two devices for applying liquid are designed as liquid distributors (1), which distribute the liquid across the entire width of the internal (3),
wherein the intermediate space between the upper surface of the internal and the upper wall of the housing (7) is filled with a mat (2) composed of an open-cell and liquid-permeable foam or of a liquid-permeable fibre material, and
wherein the liquid distributor (1) is arranged such that the liquid passes out of the liquid distributor in each case through the mat (2).

2. Device according to Claim 1, wherein the at least two devices for applying liquid and the at least two collecting devices are arranged within the same housing, and the at least two liquid flows which are created by said devices run through the same internal.

3. Device according to either of Claims 1 and 2, wherein the liquid flows through the internal are combined with one another from top to bottom such that an overall liquid flow, which runs in the opposite direction to the gas flow, can be created through the device.

4. Device according to Claim 3, wherein the combining of the liquid flows to form an overall liquid flow takes place by way of the collecting devices.

5. Method for bringing a gas flow and a liquid flow into contact in a device according to one of the preceding claims, wherein the liquid flow runs substantially perpendicularly through the mat (2) and the internal (3) from top to bottom, said internal (3) being suitable for increasing the mass transfer area between the gas flow and liquid flow, wherein the internal (3) is a bed of packing elements, the gas flow runs substantially at right angles to the liquid flow, and the liquid flow comprises at least two partial liquid flows, which are arranged in succession in the direction of the gas flow.

## Revendications

1. Dispositif destiné à mettre en contact un flux de gaz et un flux de liquide, qui comprend ce qui suit :
un boîtier (7) fermé,
un aménagement intégré (3) qui est apte à agrandir la surface d'échange de substances entre le flux de gaz et le flux de liquide,
l'aménagement intégré (3) étant constitué de corps de remplissage en vrac,
au moins deux dispositifs pour la fourniture de liquide sur la face supérieure de l'aménagement intégré (3), qui sont aptes chacun à générer un flux de liquide du haut vers le bas à travers l'aménagement intégré (3),
au moins deux dispositifs collecteurs destinés à recevoir du liquide qui sort du côté inférieur de l'aménagement intégré (3),
une entrée de gaz dans le boîtier,
une sortie de gaz du boîtier,
sachant qu'ensemble, l'entrée de gaz et la sortie de gaz sont aptes à permettre à travers l'aménagement intégré (3) un flux de gaz, qui s'écoule sensiblement à angle droit du flux de liquide,
les aux moins deux dispositifs pour la fourniture de liquide et les au moins deux dispositifs collecteurs étant placés les uns derrière les autres dans la direction du flux de gaz, au choix dans le même boîtier ou dans des boîtiers séparés,
les au moins deux dispositifs pour la fourniture de liquide étant conçus sous la forme d'un distributeur de liquide (1) qui distribue le liquide sur l'ensemble de la largeur de l'aménagement intégré (3),
l'espace intermédiaire entre la surface supérieure de l'aménagement intégré et la paroi supérieure du boîtier (7) étant rempli par une natte (2) en une mousse synthétique à pores ouverts et perméable au liquide ou en une matière fibreuse perméable au liquide et
le distributeur de liquide (1) étant placé de telle sorte que le liquide sorte du distributeur de liquide en passant chaque fois à travers la natte (2).

2. Dispositif selon la revendication 1, les au moins deux dispositifs pour la fourniture de liquide et les au moins deux dispositifs collecteurs étant placés à l'intérieur du même boîtier et les au moins deux flux de liquide générés par ces derniers s'écoulant à travers le même aménagement intégré.

3. Dispositif selon l'une quelconque des revendications 1 à 2, les flux de liquide étant reliés l'un à l'autre du haut vers le bas par l'aménagement intégré de telle sorte qu'il puisse être généré un flux de liquide total à travers le dispositif qui s'écoule en direction opposée au flux de gaz.

4. Dispositif selon la revendication 3, la liaison des flux de liquide en un flux de liquide total étant effectuée par les dispositifs collecteurs.

5. Procédé destiné à mettre en contact un flux de gaz et un flux de liquide dans un dispositif selon l'une quelconque des revendications précédentes, le flux de liquide s'écoulant sensiblement à la verticale, du haut vers le bas à travers la natte (2) et l'aménagement intégré (3) qui est apte à agrandir la surface d'échange des substances entre le flux de gaz et le flux de liquide, sachant que l'aménagement intégré (3) est constitué de corps de remplissage en vrac, le flux de gaz s'écoule sensiblement à angle droit du flux de liquide, le flux de liquide comprend au moins deux flux de liquide partiels, qui sont placés l'un derrière l'autre dans la direction du flux de gaz.
